# FASCICULE DE BREVET EUROPEEN

(11) **EP 0 325 870 B1**
(45) Date de publication et mention de la délivrance du brevet: **24.03.1993**
(21) Numéro de dépôt: 88400210.6
(22) Date de dépôt: 29.01.1988
(51) Int. Cl.: A21C 11/10

(54) **Extrudeuse de produit pâteux équipée d'un dispositif de découpage pour le ou les boudins extrudés**
Teigstrangpresse mit einer Vorrichtung zum Schneiden des Extrudats
Dough extruder with device for cutting the extrudate

(43) Date de publication de la demande: 02.08.1989
(73) Titulaire: LES PRESSES STELLA, F-95170 Deuil la Barre (FR)
(72) Inventeur: Riou, François Denis Claude, F-78680 Epone (FR)
(74) Mandataire: Lemoine, Robert

(56) Documents cités:
- FR-A- 2 331 438
- GB-A- 2 054 363
- US-A- 1 955 342
- US-A- 2 781 839
- US-A- 3 941 538
- US-A- 4 676 727

## Description

La présente invention concerne une installation pour la confection de gâteaux de produit pâteux, comprenant au moins un ensemble d'extrusion dont la buse débouche sur un tapis de réception et un organe de découpage pour sectionner le boudin issu de la buse, supporté, au ras de la buse, par les branches d'un étrier lui-même monté sur un bâti pour effectuer des mouvements alternatifs déplaçant ledit organe de découpage de part et d'autre de l'ouverture de la buse.

De telles installations permettent notamment de confectionner de façon rationnelle les petits gâteaux constituant les noyaux ou intérieurs des chocolats de confiserie de forme circulaire ou ovale, qui ne peuvent pas être produits à l'aide du classique emporte-pièce.

Le document FR-A-2 331 438 décrit une installation de ce type, à buse unique, souffrant d'une insuffisance de productivité dans le cadre de la fabrication industrielle de produits de confiserie.

Par ailleurs, dans l'installation objet de ce document, l'organe de découpage est constitué par un simple fil qui ne réalise pas toujours une coupe nette du boudin extrudé.

La présente invention se propose de remédier à ce double inconvénient et, pour ce faire, elle a pour objet une installation pour la confection de gâteaux de produits pâteux, du type spécifié ci-dessus, qui se caractérise en ce que, comprenant plusieurs ensembles d'extrusion dont les buses sont juxtaposées, elle est munie de plusieurs organes de découpage respectivement associés à ces dernières, consistant en des tronçons de lame à double tranchant dont les étriers de support sont juxtaposés en ayant une branche commune pour former un peigne, chaque tronçon de lame, retenu entre deux branches successives dudit peigne, étant maintenu plaqué contre la face inférieure de la buse associée par au moins une lame de ressort.

Ainsi, à l'aide d'un seul dispositif de découpage, on réalise le sectionnement simultané des boudins à l'aide d'un seul moyen d'actionnement. En outre, les différentes lames dece dispositif sont maintenues fermement plaquées contre les buses, assurant ainsi une coupe nette des boudins.

De préférence, deux lames de ressort sont prévues pour plaquer chaque tronçon de lame contre la face inférieure de la buse correspondante, de part et d'autre de l'ouverture de cette dernière.

Avantageusement, deux butoirs sont positionnés de part et d'autre de la buse de chaque ensemble d'extrusion, en étant alignés dans la direction de déplacement du tronçon de lame associé et positionnés dans un plan situé en-dessous de cette dernière, chaque butoir étant monté réglable en hauteur sur un portique enjambant le tapis de réception.

Cette disposition présente un intérêt tout particulier dans des installations munies de plusieurs ensembles d'extrusion associés à des tapis de réception défilant dans l'un des sens de déplacement de la lame, pour recueillir et amener en continu jusqu'à l'enrobeuse de chocolat qui suit, les gâteaux simultanément débités dans les boudins extrudés.

En effet, dans cette application, les gâteaux, qui sont inévitablement projetés vers l'avant ou l'arrière par la lame en mouvement, viendront heurter le butoir correspondant pour retomber en ligne sur les différents tapis, permettant ainsi à l'opération d'enrobage automatique qui suit de se dérouler dans des conditions optimales de productivité.

Avantageusement, la position de chacun des portiques de support des butoirs est réglable le long du tapis associé.

Une description plus détaillée, mais non-limitative, de la présente invention va être donnée ci-après en référence aux dessins annexés dans lesquels :
- la figure 1 est une vue en perspective d'une extrudeuse de produit pâteux, n'entrant pas dans le cadre de la présente invention;
- la figure 2 représente, à grande échelle, la section transversale de la lame de coupe de ce dispositif, monté à l'extrémité de son étrier de support ;
- les figures 3 et 4 sont des vues en coupe longitudinales schématiques du dispositif de découpage de la figure 1, dans ses deux positions extrêmes de fonctionnement ;
- la figure 5 est une vue en perspective d'un dispositif de découpage pour extrudeuse multi-buses, conforme à un mode de réalisation de l'invention ; et
- les figures 6 et 7 représentent, respectivement de profil et partiellement en perspective, un dispositif de guidage additionnel associé au dispositif de découpage équipant l'extrudeuse de la figure 5.

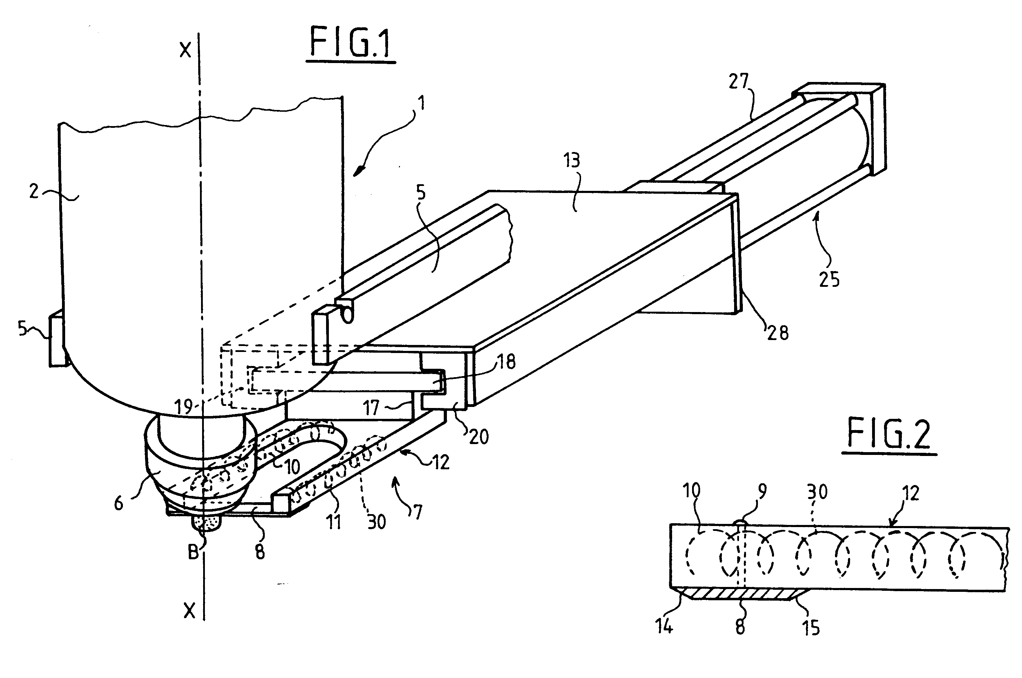

L'extrudeuse 1, visible sur la figure 1, fait partie, dans l'exemple représenté, d'une installation pour la confection de produits de confiserie à enrobage chocolaté, dont elle constitue le premier poste réalisant les noyaux ou intérieurs de ces produits.

Cette extrudeuse 1, qui est d'une construction connue en soi, se présente extérieurement sous la forme d'un pot cylindrique 2, retenu en position verticale, avec une possibilité de démontage rapide, sur des bras de support 5 solidaires du châssis de l'installation. Dans le pot 2 rempli de pâte de confiserie, un piston non représenté est progressivement déplacé de haut en bas, par un mécanisme classique à engrenages et vis sans fin, pour pousser la pâte vers le fond conique du pot 2 qui se prolonge en son centre par une buse amovible 6, à travers laquelle la pâte est extrudée sous la forme d'un boudin cylindrique continu B. Au fur et à mesure qu'il s'extrait de la buse 6, ce boudin de pâte B est sectionné, à intervalles réguliers, par un dispositif de découpage 7, qui fait plus précisément l'objet de la présente invention.

Ce dispositif de découpage comprend une mince lame de coupe métallique 8 fixée et tendue, par des vis 9, entre les extrémités libres des deux branches 10, 11 d'un étrier métallique en forme de U 12, qui est quant à lui monté déplaçable en translation dans un bâti 13, solidaire du châssis non-représenté de l'installation.

La figure 2 montre que la lame 8, qui aura de préférence une largeur de 5 mm pour une épaisseur inférieure à 0,5 mm, présente un tranchant 14, 15 sur chacun de ses bords longitudinaux.

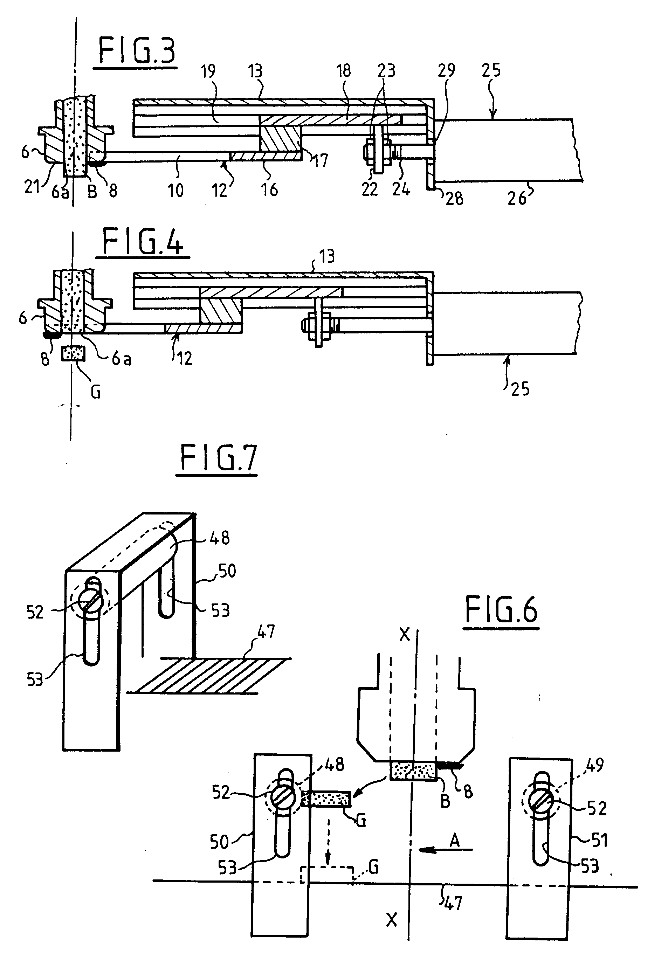

En revenant à la figure 1, on peut voir que l'étrier 12 est en fait soudé, par sa branche centrale 16, à la base d'un coulisseau en forme de T 17, dont la partie supérieure, constituée par une plaque 18, s'engage à coulissement libre, par ses deux bords saillants, dans des rails 19, 20 intégrés dans le bâti 13. Ce bâti 13 est en outre positionné de telle façon que la plaque coulissante 18 s'étende dans un plan horizontal sensiblement perpendiculaire à l'axe vertical d'extrusion X et qu'en outre la lame 8, placée transversalement à cet axe, soit maintenue en contact glissant avec la face inférieure lisse 21 de la buse 6, d'un côté de l'ouverture 6a de cette dernière, comme on le voit plus clairement sur la figure 3.

Cette figure montre encore que la plaque supérieure 18 du coulisseau 17 se prolonge à l'arrière de ce dernier pour être raccordée, par une bride inférieure 22 et deux écrous 23, à la tige 24 à bout fileté d'un vérin pneumatique 25, dont le corps 26 est fixé, par une cage de support 27 sur le dos de la paroi arrière 28 du bâti 13, cette paroi 28 étant percée d'une ouverture 29 pour le passage de la tige du vérin.

Le vérin 25 peut être mis en action pour animer l'étrier 12 de mouvements alternatifs déplaçant la lame 8 d'un côté à l'autre de l'ouverture 6a de la buse 6. La lame 8, parfaitement guidée dans son mouvement de par son contact glissant avec la face inférieure 21 de la buse, sectionnera alors de façon nette, au ras de l'ouverture 6a de cette dernière, le boudin B en cours d'extrusion pour, à chaque course aller ou retour, débiter un gâteau de pâte G. Les gâteaux de pâte ainsi produits sans déformation, ni aucun autre défaut, tomberont l'un après l'autre sur un tapis ou une grille mobile de réception non représenté, qui les amènera au poste suivant d'enrobage.

La régularité du coulissement de l'étrier 12 portant la lame 8 sera garantie par la mise en place de paliers à billes dans les rails du bâti 13. En outre, en étant chauffée à une température convenable, la lame 8 pénètrera plus facilement dans le boudin de pâte B et, à cette fin, des résistances électriques de chauffage isolées 30, alimentées par une source de courant non représentée, sont incorporées dans les branches latérales 10, 11 de l'étrier 12. Enfin, le vérin 25 sera de préférence actionné par une commande préprogrammable à relais électroniques, grâce à laquelle on pourra régler à une valeur constante choisie l'intervalle de temps entre deux mouvements successifs de la lame 8 et donc la hauteur des gâteaux G. Cette commande pourra éventuellement être remplacée par un détecteur pneumatique ou photoélectrique.

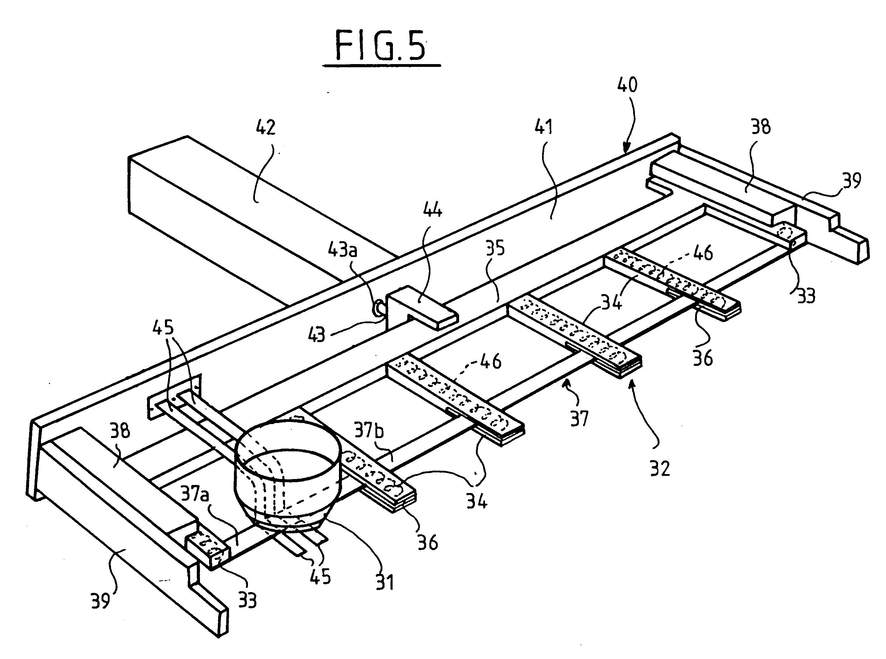

La figure 5 illustre un mode de réalisation du dispositif de découpage selon l'invention, plus particulièrement destiné à équiper une extrudeuse à plusieurs buses 31, dont une seulement est dessinée.

Dans ce mode de réalisation, le support de lame est constitué par un peigne métallique 32 comportant six branches parallèles 33, 34 régulièrement réparties sur une traverse arrière 35 et retenant, dans des entailles 36 formées à leurs extrémités libres, une longue lame continue métallique 37 présentant, en section transversale, la même forme et les mêmes dimensions que la lame 8 de l'extrudeuse de la figure 1.

Par ses deux branches extérieures 33, le peigne 32 est monté à coulissement libre dans deux rails 38 formés sur l'intérieur des deux branches latérales 39 d'un bâti fixe en forme de U 40. La membrure arrière 41 de ce bâti 40 porte, sur sa face extérieure, le corps 42 d'un vérin pneumatique dont la tige 43, après avoir traversé une lumière pratiquée dans cette membrure, est reliée, par une chape 44, à la traverse arrière 35 du peigne 32.

Les tronçons, tels que 37a et 37b, de la lame 37, délimités par les branches successives 33, 34 du peigne 32, sont là encore maintenus en permanence au contact de la face inférieure lisse des buses respectives 31, par un positionnement adéquat du peigne 32 et de son bâti 40 vis-à-vis de ces dernières. Mais ici, pour garantir la permanence de ce contact, deux lames de ressort coudées 45, fixées à la membrure arrière 41 du bâti 40 au-dessus de la traverse arrière 35 du peigne 32, viennent plaquer chaque tronçon de la lame 37 contre la buse respective 31, de part et d'autre de l'ouverture de cette dernière, tout en autorisant le coulissement de la lame.

Bien entendu, tous les aménagements et les avantages résultants, prévus dans l'extrudeuse décrit en référence aux figures 1 à 4, se retrouvent dans l'extrudeuse selon l'invention dont le peigne 32 est en fait constitué par cinq étriers, tels que 12, juxtaposés en ayant une branche commune. En particulier, le vérin 42, 43 du second mode de réalisation est lui aussi de préférence actionné par une commande à relais préprogrammable, et des résistances électriques de chauffage 46 sont incorporées dans les branches 33, 34 du peigne 32.

Un dispositif additionnel de guidage des gâteaux découpés, représenté sur les figures 6 et 7, est en outre prévu dans le mode de réalisation de l'installation objet de la présente invention.

Les figures 6 et 7 montrent la grille 47 de réception des gâteaux découpés qui s'étend dans un plan horizontal sous chaque buse 31 et est entraînée en continu parallèlement à l'un des sens de déplacement A de la lame 37, pour transférer, comme dans l'extrudeuse de la figure 1, les gâteaux G vers le poste d'enrobage.

Le dispositif de guidage susmentionné est plus précisément constitué par deux butoirs parallèles 48, 49 maintenus légèrement en amont et en aval de la buse 31, par des portiques respectifs 50, 51 enjambant la grille 47. Les deux butoirs 48, 49, qui sont formés par de petits cylindres en caoutchouc, ont leurs axes alignés dans un même plan parallèle au plan de déplacement de la lame 37 et situés légèrement au-dessous de cette dernière.

Dans chaque portique 50 ou 51, le butoir 48 ou 49 est fixé à l'aide de deux vis 52 s'appuyant sur les bords d'une lumière oblongue verticale 53 pratiquée dans une paroi latérale respective du portique, les deux vis 52 permettant de régler facilement en hauteur la position du butoir correspondant. Par ailleurs, chacun des portiques 50 ou 51 peut être déplacé et immobilisé dans n'importe quelle position le long de la grille 47 à l'aide de moyens non représentés.

Lorsque les butoirs ont été convenablement positionnés, par exemple comme représenté sur la figure 6, les gâteaux, qui sont inévitablement projetés vers l'avant ou l'arrière lors de leur sectionnement par la lame 37, viennent heurter le butoir amont 49 ou aval 48 pour ainsi tomber à la verticale sur le grille 9, comme cela est représenté en traits interrompus sur la figure 6.

De la sorte, les gâteaux G, débités simultanément par la lame 37 au ras des cinq buses 31, viendront se placer sur une même ligne sur les cinq grilles correspondantes 47, ce qui est une condition nécessaire pour que l'opération d'enrobage automatique qui suit puisse se faire dans les meilleures conditions et avec les meilleurs résultats.

## Revendications

1. Installation pour la confection de gâteaux de produit pâteux, comprenant au moins un ensemble d'extrusion (31) dont la buse débouche sur un tapis de réception et un organe de découpage (37a, 37b) pour sectionner le boudin issu de la buse, supporté, au ras de la buse, par les branches (33, 34) d'un étrier lui-même monté sur un bâti (13) pour effectuer des mouvements alternatifs déplaçant ledit organe de découpage de part et d'autre de l'ouverture de la buse, ladite installation étant caractérisée en ce que, comprenant plusieurs ensembles d'extrusion dont les buses sont juxtaposées, elle est munie de plusieurs organes de découpage respectivement associé à ces dernières, consistant en des tronçons de lame a double tranchant (37a, 37b) dont les étriers de support sont juxtaposés en ayant une branche commune (34) pour former un peigne (32), chaque tronçon de lame, retenu entre deux branches successives (33, 34) dudit peigne, étant maintenu plaqué contre la face inférieure de la buse associée (31) par au moins une lame de ressort (45).

2. Installation selon la revendication 1, caractérisée en ce que deux lames de ressort (45) sont prévues pour plaquer chaque tronçon de lame (37a, 37b) contre la face inférieure de la buse correspondante, de part et d'autre de l'ouverture de cette dernière.

3. Installation selon la revendication 1 ou 2, caractérisée en ce que le bâti (40) présente la forme d'un U dont les branches latérales (39) sont munies intérieurement de rails (38) par lesquels elles retiennent à coulissement entre elles le peigne (32).

4. Installation selon la revendication 3, caractérisée en ce que les lames de ressort (45) sont coudées et prennent appui sur la membrure arrière (41) du bâti en U (40) en passant au-dessus de la traverse arrière (35) du peigne (32).

5. Installation selon l'une quelconque des revendications 1 à 4, caractérisée en ce que les tronçons de lame respectivement associés aux buses (31), sont réunis bout-à-bout sous la forme d'une longue lame continue sous-tendue par les branches (33, 34) du peigne (32).

6. Installation selon l'une quelconque des revendications 1 à 5, caractérisée en ce que deux butoirs (48, 49) sont positionnés de part et d'autre de la buse (31) de chaque ensemble d'extrusion, en étant alignés dans la direction de déplacement du tronçon de lame associé (37a, 37b) et positionnés dans un plan situé en-dessous de cette dernière, chaque butoir étant monté réglable en hauteur sur un portique (50, 51) enjambant le tapis de réception (47).

7. Installation selon la revendication 6, caractérisée en ce que le tapis de réception (47) est mobile dans l'un des sens de déplacement (A) de la lame et passe sous les deux butoirs (48, 49) respectivement placés légèrement en amont et en aval de la buse (6 ; 31) correspondante.

8. Installation selon la revendication 7, caractérisée en ce que la position de chacun des portiques (50, 51) supportant les butoirs (48, 49) est réglable le long du tapis de réception (47).

9. Installation selon l'une quelconque des revendications 1 à 8, caractérisée en ce que le peigne support de lame (32) est déplaçable par un vérin à commande pré-programmable (25 ; 42, 43).

## Claims

1. An installation for the production of cakes of pasty products, comprising at least one extruder (31), the nozzle of which opens on to a receiving mat, and a cutter (37a, 37b) to slice the ribbon extruded from the nozzle, the cutter being supported at substantially the nozzle level by the arms (33, 34) of a stirrup mounted on a frame (13) adapted to reciprocate the cutter from side to side under the nozzle mouth, characterized in that it comprisers a plurality of extruders, the nozzles of which are juxtaposed, and is equipped with a corresponding plurality of associated cutters, which consist of lengths (37a, 37b) of double-edged cutting strip material supported by juxtaposed stirrups joined together by common arms (34) to form a comb (32), each cutting length held between successive arms (33,34) of the comb being urged against the underside of the associated nozzle (31) by at least one spring leaf (45).

2. An installation as in Claim 1, characterized in that paired spring leaves (45) are provided to hold each cutting length (37a, 37b) against the underside of the associated nozzle, one on each side of the nozzle mouth.

3. An installation as in Claim 1 or 2, characterized in that the frame (40) is U-shaped, the insides of the two lateral arms (39) carrying rails (38) which support the comb (32) sliding between them.

4. An installation as in Claim 3, characterized in that the spring leaves (45) are cranked, and are fixed on the rear member (41) of the U-shaped frame (40), above the rear crosspiece (35) of the comb (32).

5. An installation as in any of Claims 1 to 4, characterized in that the cutting lengths associated with the successive nozzles (319 are butt-jointed together in the form of a long continuous strip held by the arms (33, 34) of the comb (32).

6. An installation as in any of Claims 1 to 5, characterized in that paired buffers (48, 49) are mounted up- and downstream of the nozzle (31) in each extruder, being aligned in the direction of motions of the associated cutting length (37a, 37b) and set in a higher plane than the latter, with provision for height adjustments, in gantries (50, 51) straddling the receiving mat (47).

7. An installation as in Claim 6, characterized in that the receiving mat (47) can move in one of the directions (a) of the cutter motions, and passes under the paired buffers (48, 49) disposed slightly up- and downstream of the associated nozzle (6; 31).

8. An installation as in Claim 7, characterized in that the positions of the various gantiries (50, 51) carrying the buffers (48, 49) is adjustable lengthwise of the receiving mat (47).

9. An installation as in any of Claims 1 to 8, characterized in that the strip-supporting comb (32) is reciprocated by a programme-controlled jack (25; 42, 43).

## Patentansprüche

1. Anlage zur Herstellung von Teigwaren, mit wenigstens einer Extrusionseinrichtung (31), deren Düse auf eine Empfangsbahn mündet, und mit wenigstens einem zum Aufteilen des von der Düse abgegebenen Stranges dienenden Schneidorgan (37a,37b), das in Höhe der Düse durch die Arme (33,34) eines Bügels gehalten ist, der seinerseits so an einem Gestell (13) montiert ist, daß er hin- und hergehende Bewegungen ausführen kann und das Scheidorgan von einer Seite der Düsenöffnung zur anderen bewegt, dadurch **gekennzeichnet,** daß die Anlage mehrere Extrusionseinrichtungen mit nebeneinander angeordneten Düsen aufweist und mit mehreren Schneidorganen versehen ist, die jeweils den einzelnen Düsen zugeordnet sind und aus Abschnitten (37a,37b) einer zweischneidigen Klinge bestehen, deren Tragbügel nebeneinander angeordnet sind und einen Arm (34) gemeinsam haben, so daß sie einen Kamm (32) bilden, wobei jeder Abschnitt der Klinge, der zwischen zwei aufeinanderfolgenden Armen (33,34) des Kammes gehalten wird, durch wenigstens eine Blattfeder (45) gegen die Unterseite der zugehörigen Düse (31) gehalten wird.

2. Anlage nach Anspruch 1, dadurch **gekennzeichnet,** daß zwei Blattfedern (45) vorgesehen sind, um jeden Klingenabschnitt (37a, 37b) beiderseits der Öffnung der zugehörigen Düse gegen die Unterseite der Düse arzudrücken.

3. Anlage nach Anspruch 1 oder 2, dadurch **gekennzeichnet,** daß das Gestell (40) die Form eines U hat, dessen seitliche Arme (39) innen mit Schienen (38) versehen sind, mit denen sie den Kamm (32) gleitbeweglich zwischen sich halten.

4. Anlage nach Anspruch 3, dadurch **gekennzeichnet,** daß die Blattfedern (45) abgewinkelt sind und sich an der rückwärtigen Querwand (41) des U-förmigen Gestells (40) abstützten, wobei sie über die hintere Traverse (35) des Kammes (32) hinwegverlaufen.

5. Anlage nach einem der Ansprüche 1 bis 4, dadurch **gekennzeichnet,** daß die Abschnitte der Klinge, die den jeweiligen Düsen (31) zugeordnet sind, endweise zu einer langen durchgehenden Klinge verbunden sind, die durch die Arme (33,34) des Kammes (32) umfaßt wird.

6. Anlage nach einem der Ansprüche 1 bis 5, dadurch **gekennzeichnet,** daß zwei Prallkörper (48,49) beiderseits der Düse (31) jeder Extrusionseinrichtung angeordnet und dabei in Bewegungsrichtung des zugehörigen Klingenabschnitts (37a,37b) ausgerichtet und in einer Ebene unterhalb dieses Klingenabschnitts positioniert sind, und daß jeder Prallkörper höhenverstellbar an einem Portalrahmen (50,51) montiert ist, der die Empfangsbahn (47) überspannt.

7. Anlage nach Anspruch 6, dadurch **gekennzeichnet,** daß die Empfangsbahn (47) in einer der Bewegungsrichtungen (A) der Klinge beweglich ist und unter den beiden Prallkörpern (48,49) hindurch verläuft, die jeweils etwas vor und hinter der zugehörigen Düse (6;31) angeordnet sind.

8. Anlage nach Anspruch 7, dadurch **gekennzeichnet,** daß die Position jedes der Portalrahmen (50,51), die die Prallkörper (48,49) tragen, in Längsrichtung der Empfangsbahn (47) einstellbar ist.

9. Anlage nach einem der Ansprüche 1 bis 8, dadurch **gekennzeichnet,** daß der die Klinge tragende Kamm (32) mit Hilfe eines Stellantriebs (25;42,43) mit vorprogrammierbarer Steuerung bewegbar ist.
